# EUROPÄISCHE PATENTSCHRIFT

(11) **EP 1 780 425 B1**
(45) Veröffentlichungstag und Bekanntmachung des Hinweises auf die Patenterteilung: **01.10.2008**
(21) Anmeldenummer: 06022303.9
(22) Anmeldetag: 25.10.2006
(51) Int. Cl.: F16B 5/06, B60R 13/02

(54) **Verbindungselement**
Connection element
Elément de liaison

(30) Priorität: 26.10.2005 DE 202005016824 U
(43) Veröffentlichungstag der Anmeldung: 02.05.2007
(73) Patentinhaber: TRW Automotive Electronics & Components GmbH, 78315 Radolfzell (DE)
(72) Erfinder: Klein, Jean-Luc, 67350 Ringendorf (FR)
(74) Vertreter: Strass, Jürgen

(56) Entgegenhaltungen:
- EP-A1- 0 648 944
- DE-A1- 10 023 109
- DE-A1- 19 748 780
- FR-A1- 2 800 833

## Beschreibung

Die Erfindung betrifft ein Verbindungselement, insbesondere zur Verbindung eines Fahrzeuginnenverkleidungsteils mit einem Träger, mit einem Kopfteil zur Befestigung am Verkleidungsteil und einem Fußteil zur Befestigung am Träger, wobei der Kopfteil und der Fußteil elastisch so miteinander verbunden sind, daß der Fußteil relativ zum Kopfteil in Richtungen senkrecht zu einer Mittelachse des Verbindungselements beweglich ist.

Aus der DE 197 53 678 A1 ist ein Verbindungselement bekannt, an dessen einem Ende sich ein Kopfteil befindet, das vor der Montage am Verkleidungsteil befestigt wird. Am anderen Ende des Verbindungselements befindet sich ein Fußteil in Form eines Spreizelements, welches bei der Montage in eine am Träger vorgesehene Öffnung gesteckt wird. Durch Andrücken des Verkleidungsteils wird das Spreizelement von einem Konus gespreizt und damit der Fußteil im Träger verriegelt.

Aus der EP 0 648 944 A1 ist ein Verbindungselement mit den Merkmalen des Oberbegriffs des Anspruchs 1 bekannt. Bei diesem Verbindungselement sorgen spiralförmig verlaufende elastische Arme für einen Toleranzausgleich. Ein ähnliches Konzept geht aus der FR 2 800 833 A1 hervor.

Auch die DE 100 23 109 A1 zeigt ein Verbindungselement mit den Merkmalen des Oberbegriffs des Anspruchs 1, das sich bezogen auf das zu befestigende Verkleidungsteil elastisch in alle drei Raumrichtungen verlagern läßt. Hierzu sind ebenfalls spiralförmige Arme vorgesehen.

Aufgabe der Erfindung ist es, bei der Montage eines Verkleidungsteils an einem Träger mittels eines Verbindungselements einen Toleranzausgleich und gleichzeitig eine verbesserte Aufnahme von axialen Abzugskraften zu ermöglichen.

Dies wird gemäß der Erfindung durch ein Verbindungselement mit den Merkmalen des Anspruchs1 erreicht. Die elastische Lagerung des Fußteils erlaubt bei der Montage des Verkleidungsteils eine stufenlose Verschiebung des Fußteils. Dadurch kann sich der Fußteil an die Position der entsprechenden Öffnung im Träger automatisch anpassen und sicher einrasten. Falls die Abstände der Verbindungselemente auf dem Verkleidungsteil nicht exakt mit den Abständen der zugehörigen Öffnungen auf dem Träger übereinstimmen, gestatten die in sich beweglichen Verbindungselemente einen entsprechenden Ausgleich, so daß auch nach der Montage keine Verspannungen im Verkleidungsteil auftreten.

Vorteilhafte und zweckmäßige Ausgestaltungen des erfindungsgemäßen Verbindungselements ergeben sich aus den Unteransprüchen.

Die Erfindung wird nachfolgend anhand einer bevorzugten Ausführungsform unter Bezugnahme auf die beigefügten Zeichnungen beschrieben. In den Zeichnungen zeigen:
- Figuren 1a, 1b zwei unterschiedliche perspektivische Ansichten eines erfindungsgemäßen Verbindungselements mit Blick auf den Kopfteil; und
- Figur 2 eine perspektivische Ansicht des Verbindungselements mit Blick auf den Fußteil.

Das in den Figuren dargestellte erfindungsgemäße Verbindungselement 10 ist zur Anbringung eines Fahrzeuginnenverkleidungsteils an einen Träger, z.B. ein Fahrzeugtürblech, vorgesehen. Das Verbindungselement 10 umfaßt einen Kopfteil 12 und einen Fußteil 14, die über zwei wellenförmige Federn 16 elastisch miteinander verbunden sind.

Der Kopfteil 12 weist einen zu einer Mittelachse A des Verbindungselements 10 konzentrischen Zylinderabschnitt 18 mit Rastnasen 20 auf. An den Zylinderabschnitt 18 sind jeweils auf gleicher Höhe ein teilweise umlaufender Außensteg 22 und ein Innensteg 24 angeformt. Die Stege 22, 24 sind durch einen Durchgang 26 unterbrochen.

Der Fußteil 14 weist ein elastisches, spitz zulaufendes Clipprofil 28 auf. Über dem Clipprofil 28 sind ein Federteller 30 und eine optionale Schaumstoffdichtung 32 angeordnet. Ein mittiger Dorn 34 erstreckt sich in axialer Richtung vom Clipprofil 28 durch den Durchgang 26 bis über den Zylinderabschnitt 18 des Kopfteils 12 hinaus. An den Dorn 34 ist ein Stützprofil 36 angeformt. Die wellenförmigen Federn 16 sind an ihren inneren Enden mit dem Dorn 34 und an ihren äußeren Enden mit der Innenseite des Zylinderabschnitts 18 verbunden.

Vor der Montage des am Träger anzubringenden Verkleidungsteils wird das Verbindungselement 10 am Verkleidungsteil angebracht. Dazu wird das Verbindungselement 10 mit dem Kopfteil 12 frontal (d.h. in Richtung der Achse A) in eine auf den Kopfteil 12 abgestimmte Aufnahme des Verkleidungsteils gedrückt, bis die Rastnasen 20 in der Aufnahme einrasten. Der Außensteg 22 dient dabei als Anschlag und erlaubt die Halterung des Verbindungselements 10 während der Anbringung. Da das Kopfende 38 des Dorns 34 über den Zylinderabschnitt 18 des Kopfteils 12 hinausragt, wird bei der Befestigung des Kopfteils 12 am Verkleidungsteil der Fußteil 14 aus seiner Ausgangslage vom Verkleidungsteil weg in eine Montagelage gedrückt.

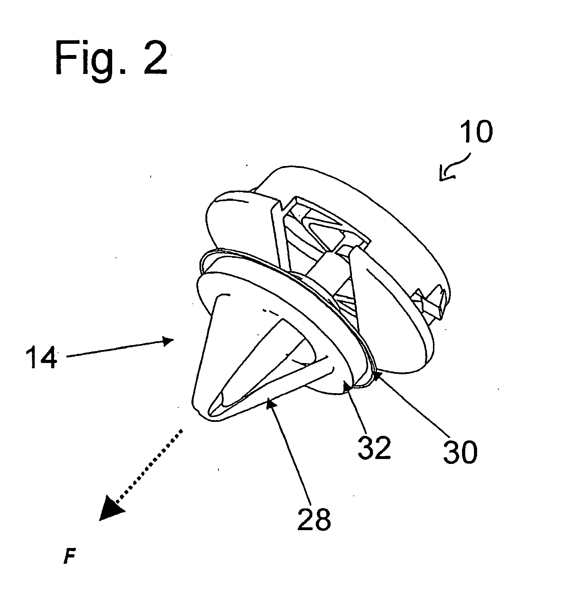

Anschließend wird das Verkleidungsteil am Träger montiert, indem der Fußteil 14 des Verbindungselements 10 mit dem Clipprofil 28 in eine passende Öffnung des Trägers gesteckt wird und dort einrastet. Da sich das Kopfende 38 des Dorns 34 an der Aufnahme des Verkleidungsteils abstützt, wird bei diesem Vorgang ein unerwünschtes Zurückschieben des Fußteils 14 vermieden. Außerdem führt die vorangegangene axiale Verschiebung des Fußteils 14 in die Montagelage dazu, daß sich das Stützprofil 36 des Fußteils 14 an den Innenstegen 24 des Kopfteils 12 abstützt, um im montierten Zustand des Verkleidungsteils die axialen Abzugskräfte F (siehe Figur 2) aufnehmen zu können. Der Federteller 30 dient zum Ausgleich der Stärke des Trägers und zur Dichtung. Die Dichtwirkung kann durch die optionale Schaumstoffdichtung 32 erhöht werden.

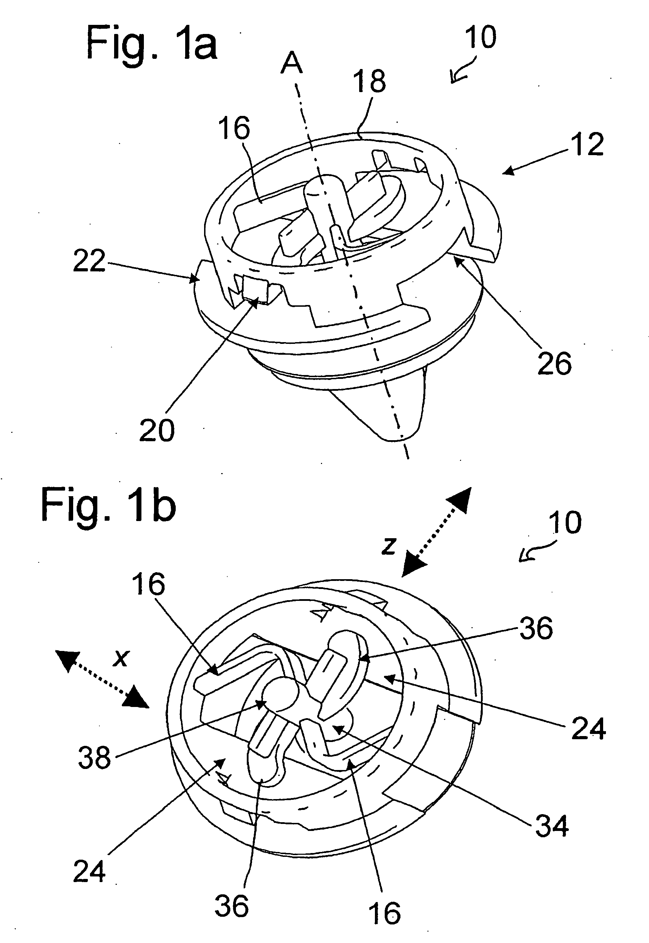

Die elastische Lagerung des Fußteils 14 erlaubt während der Montage des Verkleidungsteils eine Verschiebung des Fußteils 14 relativ zum fest am Verkleidungsteil angebrachten Kopfteil 12 des Verbindungselements quer zur Steckrichtung (senkrecht zur Achse A, siehe Pfeile X und Z in Figur 1b), wobei die Grenzen der Beweglichkeit durch die Auslegung der Federn 16 und die Abmessungen des Durchgangs 26 vorgegeben werden können. Dadurch ist es möglich, Ungenauigkeiten bei der Positionierung des Verbindungselements 10 über der Öffnung des Trägers automatisch auszugleichen. Auch nach der Montage bleibt die Beweglichkeit des Fußteils 14 erhalten, so daß Verspannungen des montierten Verkleidungsteils vermieden werden.

Bei der Montage ist insbesondere der Schritt der Befestigung des Verbindungselements 10 am Verkleidungsteil automatisierbar, da das Verbindungselement keinen Zusammenbau erfordert und durch frontales Einsetzen in die Aufnahme des Verkleidungsteils, also nicht durch seitliches Aufschieben oder dergleichen, mit dem Verkleidungsteil in Verbindung gebracht wird.

Nach einer Demontage des Verkleidungsteils kehrt der Fußteil 14 in seine ursprüngliche Mittellage zurück. Bei einer erneuten Montage kann der Fußteil 14 aber bei Bedarf wieder verschoben werden.

Das Verbindungselement 10 ist in einem Spritzgußverfahren mit Hilfe spezieller Kern-/Schieberprofile in einem Arbeitsgang aus einem einzigen Material einstückig herstellbar. Es ist keine Nacharbeit oder ein Zusammenbau des Verbindungselements 10 notwendig.

Der Einsatz des erfindungsgemäßen Verbindungselements ist nicht auf die beschriebene Anwendung beschränkt.

## Patentansprüche

1. Verbindungselement, insbesondere zur Verbindung eines Verkleidungsteils mit einem Träger, mit einem Kopfteil (12) zur Befestigung am Verkleidungsteil und einem Fußteil (14) zur Befestigung am Träger, wobei der Kopfteil (12) und der Fußteil (14) elastisch so miteinander verbunden sind, daß der Fußteil (14) relativ zum Kopfteil (12) in Richtungen senkrecht zu einer Mittelachse (A) des Verbindungselements (10) beweglich ist, **dadurch gekennzeichnet, daß** der Fußteil (14) relativ zum Kopfteil (12) in axialer Richtung aus einer Ausgangslage in eine Montagelage verschiebbar ist, in der sich ein Stützprofil (36) des Fußteils (14) an einer Auflage (24) des Kopfteils (12) absfützt.

2. Verbindungselement nach Anspruch 1, **dadurch gekennzeichnet, daß** der Fußteil (14) über wenigstens ein Federelement (16) mit dem Kopfteil (12) verbunden ist.

3. Verbindungselement nach Anspruch 1 oder 2, **dadurch gekennzeichnet, daß** der Fußteil (14) eine Komponente (34) aufweist, die in axialer Richtung über den Kopfteil (12) hinausragt.

4. Verbindungselement nach einem der vorhergehenden Ansprüche, **dadurch gekennzeichnet, daß** der Kopfteil (12) einen Zylinderabschnitt (18) mit Rastnasen (20) aufweist.

5. Verbindungselement nach einem der vorhergehenden Ansprüche, **dadurch gekennzeichnet, daß** der Fußteil (14) ein elastisches, spitz zulaufendes Clipprofil (28) aufweist.

6. Verbindungselement nach einem der vorhergehenden Ansprüche, **dadurch gekennzeichnet, daß** der Fußteil (14) wenigstens ein Dichtelement (30, 32) aufweist.

7. Verbindungselement nach einem der vorhergehenden Ansprüche, **dadurch gekennzeichnet, daß** der Kopfteil (12) und der Fußteil (14) einstückig miteinander ausgebildet sind.

8. Verbindungselement nach Anspruch 7, **dadurch gekennzeichnet, daß** das Verbindungselement (10) in einem Spritzgußverfahren aus einem einzigen Material hergestellt ist.

## Claims

1. A connecting element, in particular for connecting a lining piece with a support, comprising a head part (12) for fastening to the lining piece and a foot part (14) for fastening to the support, the head part (12) and the foot part (14) being connected with each other elastically such that the foot part (14) is movable relative to the head part (12) in directions perpendicular to a central axis (A) of the connecting element (10), **characterized in that** the foot part (14) is displaceable in the axial direction relative to the head part (12) from an initial position into a mounting position, in which a support profile (36) of the foot part (14) rests against a bearing (24) of the head part (12).

2. The connecting element according to claim 1, **characterized in that** the foot part (14) is connected with the head part (12) by at least one spring element (16).

3. The connecting element according to claim 1 or 2, **characterized in that** the foot part (14) has a component (34) which projects beyond the head part (12) in the axial direction.

4. The connecting element according to any of the preceding claims, **characterized in that** the head part (12) has a cylinder section (18) with detent noses (20).

5. The connecting element according to any of the preceding claims, **characterized in that** the foot part (14) has an elastic, tapered clip profile (28).

6. The connecting element according to any of the preceding claims, **characterized in that** the foot part (14) has at least one sealing element (30, 32).

7. The connecting element according to any of the preceding claims, **characterized in that** the head part (12) and the foot part (14) are constructed as a single piece.

8. The connecting element according to claim 7, **characterized in that** the connecting element (10) is produced from a single material in an injection moulding process.

## Revendications

1. Elément de liaison, en particulier pour relier une partie de revêtement avec un support, comportant une partie de tête (12) pour la fixation sur la partie de revêtement et une partie de pied (14) pour la fixation sur le support, la partie de tête (12) et la partie de pied (14) étant reliées l'une à l'autre de manière élastique de telle sorte que la partie de pied (14) est mobile par rapport à la partie de tête (12) dans des directions perpendiculaires à un axe médian (A) de l'élément de liaison (10), **caractérisé en ce que** la partie de pied (14) peut être déplacée par rapport à la partie de tête (12) en direction axiale depuis une position initiale jusque dans une position de montage, dans laquelle un profil de soutien (36) de la partie de tête (14) prend appui sur un appui (24) de la partie de tête (12).

2. Elément de liaison selon la revendication 1, **caractérisé en ce que** la partie de pied (14) est reliée à la partie de tête (12) par au moins un élément ressort (16).

3. Elément de liaison selon la revendication 1 ou 2, **caractérisé en ce que** la partie de pied (14) présente une composante (34) qui fait saillie en direction axiale au-delà de la partie de tête (12).

4. Elément de liaison selon l'une des revendications précédentes, **caractérisé en ce que** la partie de tête (12) présente un tronçon cylindrique (18) avec des ergots d'enclenchement (20).

5. Elément de liaison selon l'une des revendications précédentes, **caractérisé en ce que** la partie de pied (14) présente un profil de clip (28) élastique effilé.

6. Elément de liaison selon l'une des revendications précédentes, **caractérisé en ce que** la partie de pied (14) présente au moins un élément d'étanchéité (30, 32).

7. Elément de liaison selon l'une des revendications précédentes, **caractérisé en ce que** la partie de tête (12) et la partie de pied (14) sont réalisées d'un seul tenant l'une avec l'autre.

8. Elément de liaison selon la revendication 7, **caractérisé en ce que** l'élément de liaison (10) est fabriqué selon un procédé de moulage par injection à partir d'un seul matériau.
